# EUROPÄISCHE PATENTSCHRIFT

(11) **EP 0 625 924 B1**
(45) Veröffentlichungstag und Bekanntmachung des Hinweises auf die Patenterteilung: **15.11.1995**
(21) Anmeldenummer: 93917376.1
(22) Anmeldetag: 04.02.1993
(51) Int. Cl.: B01D 5/00, F26B 25/00

(54) **VERFAHREN ZUR VERBESSERTEN BRÜDENENTSORGUNG BEI DER HEISSDAMPFTROCKNUNG**
IMPROVED EXHAUST VAPOUR DISPOSAL PROCESS DURING OVERHEATED STEAM DRYING
PROCEDE VISANT A UNE MEILLEURE ELIMINATION DES BUEES DANS LE SECHAGE PAR VAPEUR CHAUDE

(30) Priorität: 12.02.1992 DE 4204090; 12.02.1992 DE 4204035; 27.02.1992 DE 4206050; 02.03.1992 DE 4206521; 02.03.1992 DE 4206495; 19.03.1992 DE 4208773; 24.03.1992 DE 4209432
(43) Veröffentlichungstag der Anmeldung: 30.11.1994
(73) Patentinhaber: Henkel Kommanditgesellschaft auf Aktien, 40191 Düsseldorf (DE)
(72) Erfinder: RÄHSE, Wilfried, D-4000 Düsseldorf 13 (DE); FUES, Johann, D-4048 Grevenbroich 5 (DE); VOGLER, Reiner, D-4240 Emmerich (DE)
(86) Internationale Anmeldenummer: EP9300263
(87) Internationale Veröffentlichungsnummer: WO9315816

(56) Entgegenhaltungen:
- DE-A- 2 746 927
- GB-A- 2 064 346
- US-A- 3 325 970
- US-A- 4 289 577

## Beschreibung

Die Erfindung betrifft das Gebiet der Trocknung wasserhaltiger Zubereitungsformen von Wertstoffen und/oder Ballaststoffen durch Behandlung des wasserhaltigen Einsatzgutes mit Trocknungsgasen auf Basis von Heißdampf.

Im Rahmen großtechnischer Trocknungsverfahren gewinnt in jüngster Zeit die Technologie der Heißdampftrocknung in ihren verschiedenartigen Ausgestaltungen zunehmende Beachtung. Die Kreislaufführung des als Trocknungsgas eingesetzen überhitzten Wasserdampfs im geschlossenen System sowie die Möglichkeit der unmittelbaren Kondensation des ausgekreisten beziehungsweise abgezogenen Brüdenteilstromes schaffen gute Voraussetzungen für das Betreiben solcher Trocknungsanlagen mit geringen, die Umwelt belastenden Emissionen. In der Fachliteratur wird vermutet, daß Heißdampftrockner zunehmend Beachtung finden werden und zwar inbesondere dann, wenn sich die Kontakttrocknung mit der Trocknung in Reindampfatmosphäre verbinden läßt. Entsprechende Heißdampftrockner mit integrierten Kontaktheizflächen werden im großtechnischen Einsatz heute beispielsweise bei der Braunkohlen- und Klärschlammtrocknung oder bei der Trocknung von Rübschnitzeln, Biomassen und anderen organischen Produkten für die Tierfutterverwertung eingesetzt, vgl. hierzu beispielsweise D.Gehrmann "Entwicklungstendenzen der Trocknungstechnik in der chemischen Industrie", Chem.-Ing. Tech. 62 (1990) A 512 - 520, insbesondere die Unterkapitel 2.2 und 3.1. Verwiesen wird hier insbesondere auch auf die verschiedenen Möglichkeiten der Ausgestaltung solcher Heißdampftrocknungsanlagen. So kann die Trocknung beispielsweise in unterschiedlich ausgestalteten Dampfwirbelschichten erfolgen. Die Trocknungszone kann auch als Heißdampf-Stromtrockner ausgebildet sein. Entsprechende Verfahren werden in neuerer Zeit in der Praxis zur Herstellung von Pulpe und anderen getrockneten Naturstoffen wie Holz und Kohle eingesetzt.

Die Einsatzmöglichkeiten des Arbeitsprinzips der Heißdampftrocknung sind aber nicht auf derart vergleichsweise unempfindliche Einsatzmaterialien eingeschränkt. Die Anmelderin beschreibt in einer Mehrzahl älterer Patentanmeldungen die Anwendung dieses Arbeitsprinzips auf Wertstoffe und Wertstoffgemische, die an sich für ihre Temperatursensitivität bekannt sind, gleichwohl aber vom Anwender beziehungsweise Verbraucher nur in einer sehr hochwertigen Veredelungsstufe - insbesondere als schütt- und/oder rieselfähiges Pulver beziehungsweise Granulat - angenommen werden. So beschreibt die Anmelderin in ihrer älteren Anmeldung DE-A 40 30 688 ein Verfahren zur Gewinnung feinteiliger fester schütt- beziehungsweise rieselfähiger Wertstoffe oder Wertstoffgemische für Netz-, Wasch- und/oder Reinigungsmittel aus ihren wäßrigen Zubereitungen, wobei überhitzter Wasserdampf als trocknender Heißgasstrom eingesetzt und dabei die Trocknung des partikulären Gutes vor dessen Gefährdung durch thermische Einwirkung abgebrochen wird.

In einer Reihe weiterer älterer Anmeldungen der Anmelderin werden besondere Ausgestaltungen und Verbesserungen solcher Trocknungsverfahren mit überhitztem Wasserdampf als Heißgasstrom und deren Anwendung auf das Gebiet der Wertstoffe und Wertstoffgemische für Netz-, Wasch- und/oder Reinigungsmittel geschildert. Verwiesen wird in diesem Zusammenhang insbesondere auf die älteren deutschen Patentanmeldungen P 42 04 035.3, P 42 04 090.6, P 42 06 050.8, P 42 06 521.6 und P 42 06 495.3.

Die vorliegende Erfindung geht von der Aufgabe aus, großtechnisch einsetzbare Heißdampftrocknungsverfahren in der im nachfolgenden geschilderten Weise weiter zu entwickeln und damit eine Optimierung der Arbeitsmöglichkeiten zugänglich zu machen, die solchen Systemen zur Heißdampftrocknung innewohnen. Die erfindungsgemäße Lehre setzt dabei an dem folgenden Problem an: Die Heißdampftrocknung sieht in der Trocknungsanlage die Kreislaufführung des überhitzten Wasserdampfstromes durch die Trocknungsvorrichtung(en) und die nachfolgende Abtrennung des Brüdenteilstromes vor, der der im Trocknungsprozeß verdampften Wassermenge entspricht. Der aus dem Dampfkreislaufstrom abgezogene Brüdenteilstrom ist mit verschleppten, beispielsweise pulverförmigen, und/oder in Heißdampf mehr oder weniger stark flüchtigen, Wert- und/oder Ballaststoffen belastet. Vorgesehen ist dementsprechend die möglichst weitgehende Abtrennung solcher mitgeschleppten Wert- und/oder Ballaststoffe aus diesem Kreislaufstrom des Dampfes, üblicherweise vor der Abtrennung des Brüden-Produktteilstromes. Diese Abtrennung kann durch Behandlung mit Filtern erfolgen, häufig sind allerdings Schwerkrafttrennverfahren, insbesondere der Einsatz von Zyklon-Trennvorrichtungen vorgesehen. Eine vollständige Abtrennung der mitgeschleppten Feststoffanteile gelingt nicht. Die unter den Arbeitsbedingungen in dem Heißdampfstrom flüchtigen Anteile lassen sich ohnehin nicht abtrennen. Der letztlich aus dem Dampfkreislauf ausgeschleuste Brüdenteilstrom ist mit Restgehalten verschleppter Wert- und/oder Ballaststoffe belastet. Bei der Trocknung gegebenenfalls in geringen Mengen anfallende nicht kondensierbare Gasbestandteile werden ebenfalls von dem kontinuierlich abgezogenen Brüdenteilstrom aus dem System ausgetragen.

Für die Optimierung von Dampftrocknungsverfahren oder anderen unter Mitverwendung einer Heißdampf-Behandlungsstufe arbeitende Verfahren - beispielsweise entsprechende Agglomerationsverfahren - besteht damit das Problem, den abgezogenen Wasserdampfteilstrom in nachfolgenden Verfahrensschritten so aufzuarbeiten, daß die vom Dampf mitgeschleppten Begleitstoffe entweder in die Trocknung zurückgeführt oder wenigstens möglichst umweltunschädlich entsorgt werden können.

Die Lehre der Erfindung geht von der Aufgabe aus, hier substantielle Verbesserungen zu ermöglichen. Die erfindungsgemäße Lehre will insbesondere die praktisch emissionsfreie beziehungsweise abgas-/ abwasserfreie Aufarbeitung des abgezogenen Brüdenteilstromes ermöglichen, ohne daß für diesen Reinigungsaufwand wesentliche zusätzliche Kosten erforderlich werden. Die Erfindung will damit die Möglichkeit schaffen, in einem 1- oder mehrstufigen Nachbehandlungsverfahren ein vergleichsweise hochreines Brüdenkondensat ohne substantielle Energieverluste zur Verfügung stellen zu können.

Die technische Lösung der erfindungsgemäßen Aufgabenstellung sieht die thermische Nachreinigung des primär anfallenden Brüdenkondensats vor, wobei durch die im nachfolgenden geschilderte Kreislaufführung von Produktströmen beziehungsweise -teilströmen die zusätzliche Aufgabenstellung der Optimierung des Energiehaushalts dieser Nachbehandlung erfüllt wird.

### Gegenstand der Erfindung

Die Erfindung betrifft dementsprechend in einer ersten Ausführungsform ein Verfahren zur Optimierung der Entsorgung des mit verschleppten Wert-und/oder Ballaststoffen belasteten Brüdenteilstromes, der als Wasserdampf-Produktstrom aus mit überhitztem Wasserdampf als Trocknungsgas betriebenen Trocknungsanlagen ausgeschleust und anschließend wenigstens anteilsweise durch direkten und/oder indirekten Wärmeaustausch mit einem Kühlmedium kondensiert wird.

Das erfindungsgemäße Verfahren ist in dieser Ausführungsform dadurch gekennzeichnet, daß man das anfallende Brüdenkondensat einer wenigstens 1-stufigen thermischen Nachreinigung unterwirft, wobei als Kühlmedium zur Kondensation des aus der Trocknungsanlage abgezogenen belasteten Brüdenteilstromes zuvor gewonnenes Brüdenkondensat eingesetzt und dann zusammen mit der vom Brüdenteilstrom aufgenommenen Kondensationswärme der thermischen Nachreinigung unterworfen wird, wobei weiterhin das belastete Brüdenkondensat der thermischen Reinigung - nachfolgend auch als "Destillationsstufe" bezeichnet - als wäßrige Flüssigphase zugeführt und hier mittels der übertragenen Kondensationswärme anteilig wieder verdampft wird, während aus der Sumpfphase der Destillationsstufe ein Flüssigteilstrom mit erhöhter Konzentration an verschleppten Wert- und/oder Ballaststoffen abgezogen wird.

Die Erfindung betrifft in weiteren Ausführungsformen die Anwendung dieses Verfahrens zur praktisch abgasfreien und praktisch abwasserfreien Gewinnung getrockneter Wertstoffe, Wertstoffgemische und/oder Ballaststoffe aus ihren wasserhaltigen Zubereitungen durch Behandlung, insbesondere Trocknung, mit überhitztem Wasserdampf. Die Anwendung dieses Verfahrens kann besondere Bedeutung für die emissionsfrei optimierte Trocknung von Wertstoffen und Wertstoffgemischen Bedeutung haben, die als Netz-, Wasch- und/oder Reinigungsmittel und/oder zur Verwendung in solchen Mitteln geeignet sind. Aber auch die Anwendung auf solche feuchten oder wäßrigen Einsatzmaterialien, die bei ihrer Behandlung beziehungsweise Trocknung bekanntermaßen beträchtliche Emissionsprobleme auslösen, ist eine wichtige Ausführungsform der erfindungsgemäßen Lehre. Lediglich beispielhaft sei hier die Trocknung von Klärschlamm oder von Tierfäkalien, wie Gülle, benannt, die bekanntlich - etwa bei der Trocknung anaerob gewonnener Klärschlämme - zu beträchtlichen Geruchsbelästigungen in der Praxis führen kann.

Ein weiteres wichtiges Einsatzgebiet für die Lehre der Erfindung ist die Behandlung von toxischen Materialien beispielsweise im Sinne einer Trocknung und/oder Agglomerierung unter Mitverwendung von Heißdampf. Lediglich beispielhaft sei hier verwiesen auf hochtoxische Wertstoffgemische wie Pestizide oder Herbizide, deren Trocknung und/oder Agglomeration beträchtliche Schwierigkeiten aus dem Gesichtspunkt unerwünschter Emmissionen bereiten. Werden hier beispielsweise bei der Gewinnung von trockenen Zubereitungsformen - Pulver und/oder Agglomerate - Gasphasen als Hilfsmittel eingesetzt, so ist die Verschleppung toxischer Wertstoffe und deren Beseitigung aus den eingesetzten Gasphasen ein beträchtliches technisches Problem. Aber auch die Beseitigung toxischer oder aus anderen Gründen unerwünschter Ballaststoffe aus entsprechend beladenen Gasströmen stellt die Praxis immer wieder vor substantielle Probleme. Die Erfindung gibt in breiter Anwendbarkeit hier Abhilfemöglichkeiten.

### Einzelheiten zur erfindungsgemäßen Lehre

Der Kern des erfindungsgemäßen Handelns liegt in der Kombination nachfolgender Elemente:
Der aus der Heißdampftrocknungsanlage abgezogene und mit verschleppten Wert- und/oder Ballaststoffen belastete Brüdenteilstrom, der dem in der vorgängigen Trocknungsanlage verdampften Wasseranteil entspricht, wird jetzt in einer wenigstens einstufigen Nachbehandlung nochmals thermisch, insbesondere destillativ gereinigt. Dabei soll dieser zusätzliche Reinigungsschritt den Energiehaushalt des Gesamtverfahrens nicht oder praktisch nicht belasten.

Zur Lösung dieser Aufgabe sieht die Erfindung in einer bevorzugten Ausführungsform die folgenden Verfahrenselemente vor: Der aus der Dampftrocknungsanlage üblicherweise mit Temperaturen oberhalb 100°C abgetrennte Brüdenteilstrom wird zunächst unter Ausbildung einer geschlossenen Flüssigphase kondensiert. Erfindungsgemäß ist es dabei bevorzugt, tatsächlich praktisch die gesamte Brüdengasphase in flüssiges Brüdenkondensat umzuwandeln. Hierdurch wird sichergestellt, daß die verschleppten Wert-und/oder Ballaststoffe, soweit sie nicht bei der Verfahrenstemperatur ihrerseits gasförmige Komponenten sind, von der Flüssigphase des Brüdenkondensats aufgenommen und in dieser Form der nachfolgenden Arbeitsstufe der destillativen Reinigung zugeführt werden.

Die Kondensation der aus dem Trocknungskreislauf abgetrennten Brüdengasphase zum flüssigen Brüdenkondensat kann dabei 1-stufig oder in einer wichtigen Ausführungsform auch mehrstufig erfolgen. In dem zuletzt genannten Fall wird in beispielsweise 2 bis 5, vorzugsweise 2 bis 3 partiellen Kondensationsstufen die letztlich gewünschte vollständige Kondensation des abgezogenen Brüdenteilstromes stufenförmig im Sinne partieller und aufeinanderfolgender Kondensationsteilschritte vollzogen. In der bevorzugten Ausführungsform der Erfindung werden auch solche Brüdenteilkondensate jeweils dem im nachfolgenden im einzelnen beschriebenen Reinigungsschritt unterworfen. Technische Vorteile für eine partielle Kondensation des aus dem Trocknungskreislauf abgezogenen Brüdenteilstromes können sich beispielsweise dann ergeben, wenn aufgrund der Natur der im Brüdenteilstom mitgeschleppten Wert- und/oder Ballaststoffe durch eine solche mehrstufige partielle Kondensation eine Auftrennung dieses mitgeschleppten Stoffgemisches möglich und damit die individualisierende Wieder- beziehungsweise Weiterverwendung dieser zurückgewonnenen Stoffanteile erleichtert wird. Der Einfachheit halber geht allerdings die nachfolgende Erfindungsbeschreibung im wesentlichen von der 1-stufigen Kondensation des abgezogenen Brüdenteilstromes und der 1- oder mehrstufigen Reinigung des dabei anfallenden Brüdenkondensats aus. Sinngemäß gelten diese Angaben auch für die einzelnen Teilstufen bei der mehrstufigen partiellen Kondensation des aufzuarbeitenden belasteten Brüdenteilstromes.

Mitgeschleppte und bei Verfahrenstemperatur gasförmige Anteile des aus der Heißdampftrocknungsanlage abgetrennten Brüdenteilstromes, die bei der Kondensation dieses Dampfstromes nicht in die Flüssigphase übergehen, können durch einfache Phasentrennung vom Brüdenkondensat und damit von dessen weiterer Behandlung abgetrennt und in umweltverträglicher Weise entsorgt werden, worauf im nachfolgenden noch im einzelnen eingegangen wird. Die Notwendigkeit der Abtrennung einer Gasphase in dieser ersten Arbeitsstufe der Kondensation des Brüdenteilstromes tritt in der Regel nicht oder nur in Sonderfällen auf. In aller Regel handelt es sich dann um vergleichsweise sehr beschränkte Mengen einer getrennten Gasphase, die ohne größere technologische Schwierigkeiten der angestrebten umweltfreundlichen Entsorgung zugeführt werden können.

Der angefallene Brüdenkondensatstrom wird als Flüssigphase in die der Heißdampftrocknung nachgeschaltete Eindampf- beziehungsweise Destillationsvorrichtung überführt. Gleichzeitig wird aber erfindungsgemäß in einer wichtigen Ausführungsform mit einem Anteil dieses Brüdenkondensats, der zweckmäßigerweise aus dem Sumpf der Destillationsvorrichtung entnommen wird, der nachfolgende Kreislauf eingerichtet beziehungsweise aufrechterhalten:

Der abgezogene Anteil an Brüdenkondensat wird einem indirekten Wärmeaustauscher zur Kondensation des aus der Heißdampfanlage abgezogenen Brüdenteilstromes zugeführt. Dort nimmt er im indirekten Wärmeaustausch die Verdampfungs- beziehungsweise Kondensationsenergie des dem Wärmetauscher zugeführten Brüdendampfteilstromes auf. Die angestrebte Kondensation des dampfförmig aus der Trocknungsanlage abgezogenen Teilstromes ist das Ergebnis. Das Kondensat wird unmittelbar in die Anlage zur thermischen Behandlung überführt. Ebenso wird der zur Kondensation des Dampfstromes eingesetzte und zuvor aus dem Sumpf der Destillationsanlage entnommene Teilstrom des Brüdenkondensats nach dem Verlassen des indirekten Wärmetauschers als Träger und zusammen mit der aufgenommenen Kondensationsenergie der thermischen Behandlungsstufe zugeführt, insbesondere in die Destillationsanlage zurückgeführt. Auf diese Weise wird der im indirekten Wärmetauscher abgegebene Energiebetrag mittelbar oder unmittelbar der Destillationsanlage zugeführt und kann hier zur Verdampfung des Brüdenkondensatstromes und damit zur destillativen Nachreinigung im Sinne des erfindungsgemäßen Handelns verwertet werden.

In der besonders bevorzugten Ausführungsform des erfindungsgemäßen Verfahrens wird dementsprechend ein Teilstrom des Brüdenkondensats aus dem Sumpf der Destillationsanlage abgezogen, durch den indirekten Wärmetauscher zur Aufnahme der Kondensationswärme des dampfförmig zugeführten Brüdenteilstromes geleitet, danach in die Destillationsanlage zurückgeführt und hier mit dem flüssigen Brüdenkondensat (dem Sumpf) unmittelbar vermischt. Der Überhitzer beziehungsweise Wärmeaustauscher kann dabei aber auch in an sich bekannter Weise in die Eindampf-/Destillationsanlage integriert sein. Durch geeignete und dem Fachmann bekannte Steuerung der Verfahrensparameter gelingt damit die unmittelbare Übertragung der Kondensations- beziehungsweise Verdampfungsenergie aus dem indirekten Wärmetauscher in die nachgeschaltete Destillationsanlage. Zweckmäßig kann es in an sich bekannter Weise hierzu sein, den Teilstrom des Brüdenkondensats unter erhöhten Drucken durch den indirekten Wärmetauscher zu führen, wobei soweit erhöhte Drucke bevorzugt sein können, daß der im Kreislauf geführte Teilstrom des Brüdenkondensats auch nach dem Verlassen des Wärmetauschers wenigstens überwiegend als Flüssigphase vorliegt.

Im kontinuierlichen Betrieb ist die im erfindungsgemäßen Verfahren benötigte Menge an in flüssiger Phase vorliegendem Brüdenkondensat (Sumpf) vergleichsweise beschränkt. Sie wird einerseits bestimmt durch den Kreislauf des Brüdenkondensats aus der Destillationsanlage über beziehungsweise durch den indirekten Wärmeaustauscher mit der nachfolgenden Überführung der Kondensations- beziehungsweise Verdampfungsenergie in die Destillationsanlage zurück.

Zusätzlich ist das Ziel der erfindungsgemäßen Nachreinigung zu beachten. In dem flüssigen Brüdenkondensat reichern sich alle nicht gasförmigen mitgeschleppten Wert- und/oder Ballaststoffe an. In dieser Form können sie als ein Teilstrom dem erfindungsgemäß nachgeschalteten Reinigungszyklus entnommen werden. Dementsprechend sieht die erfindungsgemäße Lehre vor, absatzweise oder vorzugsweise kontinuierlich dem in Flüssigphase vorliegenden Sumpf der Destillationsanlage einen Teilstrom zu entnehmen, in dem die aus der Heißdampftrocknungsanlage mitgeschleppten Stoffanteile in erhöhter Konzentration vorliegen. Dieser Teilstrom kann mittelbar oder unmittelbar der Heißdampftrocknungsanlage wieder zugeführt werden. Die unmittelbare Rückführung dieses Konzentratstromes bedarf keiner weiteren Erläuterung. Ein Beispiel für die mittelbare Rückführung ist das folgende: Werden in der Heißdampftrocknungsanlage Wertstoffe getrocknet, die zuvor durch gezielte Konditionierung mit wäßrigen Phasen in eine optimale Beschaffenheit für den Einsatz in der Heißdampftrocknungsanlage aufbereitet werden, so kann das verschleppte Wertstoffe enthaltende Konzentrat aus dem Sumpf der nachgeschalteten Destillationsanlage zunächst in die Stufe der vorbereitenden Konditionierung des in der Heißdampftrocknungsanlage zu trocknenden Wertstoffes beziehungsweise Wertstoffgemisches eingesetzt werden.

Es hat sich gezeigt, daß durch eine einfache 1-stufige thermische Nachbehandlung im Sinne des erfindungsgemäßen Handelns wirkungsvolle Stofftrennungen zwischen den zu reinigenden Wasserdampfbrüden und den verschleppten Wert- beziehungsweise Ballaststoffen erreicht werden können. Für diese Möglichkeit ist insbesondere gerade auch der folgende Sachverhalt zu berücksichtigen: Die Arbeitsbedingungen in der Heißdampftrocknungsanlage werden dort primär durch das angestrebte Arbeitsergebnis des Trocknungsschrittes bestimmt. Der abgezogene Brüdenteilstrom kann dementsprechend unter Arbeitsbedingungen von Druck und insbesondere Temperatur stehen, die zu einer substantiellen Verschleppung von Wert- und/oder Ballaststoffen zusammen mit dem abgezogenen Wasserdampfteilstrom führen. Demgegenüber sind die Arbeitsbedingungen in der erfindungsgemäß vorgesehenen nachgeschalteten destillativen Reinigung nicht mehr auf das angestrebte Trocknungsergebnis der Heißdampftrocknungsanlage einzustellen, bestimmend sind hier für die gewählten Arbeitsbedingungen die angestrebte optimale Trennung zwischen Wasserdampfbrüden und verschleppten Wert- und/oder Ballaststoffen. Es leuchtet sofort ein, daß durch diesen nachgeschalteten Arbeitsschritt völlig neue Möglichkeiten zur verbesserten Systemtrennung gegeben sind. Die erfindungsgemäße Lehre nutzt diese Möglichkeit nicht nur, durch die geschilderte Sequenz und Kombination von Arbeitsschritten wird dieser gezielte Zugriff zu den veränderten Arbeitsbedingungen aus der Nutzung des Energiehaushaltes des Gesamtsystems ohne wesentliche Energieverluste möglich.

Die aus der Eindampf- beziehungsweise Destillationsanlage abgezogene Dampfphase kann nachfolgend durch bevorzugt indirekten Wärmeaustausch erneut kondensiert und - hinreichende Reinigung vorausgesetzt - gewünschtenfalls einer weiteren Verwertung zugeführt werden. Der indirekte Wärmeaustausch in dieser zweiten Kondensationsstufe stellt sicher, daß die Übertragung der Kondensationsenergie die unerwünschte Verschleppung von irgendwelchen Wert- und/oder Ballaststoffen ausschließt. Auch bei dieser zweiten Kondensation besteht je nach Beschaffenheit des eingesetzten belasteten Brüdenteilstromes die Möglichkeit der Absonderung geringer Mengen einer Abgasphase. Die hier noch auftretenden Mengen einer solchen gasförmigen Phase sind so gering, daß die umweltfreundliche zuverlässige Entsorgung ohne technologische Schwierigkeiten sichergestellt werden kann.

Eine solche zuverlässige Entsorgung ist beispielsweise die Verbrennung. In der Regel enthalten diese Gasphasen ja - beispielsweise auf dem Gebiet der Trocknung von Wertstoffen oder Wertstoffgemischen aus dem Wasch- und Reinigungsmittelgebiet - nicht-kondensierbare Anteile von Niedrigsiedern, deren Verbrennung möglich oder sogar wünschenswert ist. Welche Möglichkeiten das erfindungsgemäße Verfahren hier zur Optimierung des Gesamtprozesses eröffnet, wird an diesem Beispiel der Vernichtung der nicht-kondensierbaren Restgasphase ersichtlich: Die letztlich abgetrennten nicht-kondensierbaren gasförmigen Anteile werden in einer bevorzugten Ausführungsform in Abmischung mit den Heizgasen der Verbrennung zugeführt, die im Rahmen des vorgängigen Trocknungskreislaufes den im Kreislauf geführten Strom des überhitzten Wasserdampfes immer wieder auf die geforderte Einsatztemperatur dieses Heißdampfes aufheizen. Dabei kann die aus der Brüdenkondensataufbereitung abgetrennte Gasphase beispielsweise mit der benötigten Verbrennungsluft vorgemischt und mit den Abgasen aus dem Brenner zur Wiederaufheizung des Heißdampfkreislaufstromes auf beispielsweise 80 bis 180°C vorgewärmt werden. In dieser Form wird dann das Gemisch aus Verbrennungsluft und nicht-kondensierbaren Anteilen aus der Brüdenkondensataufbereitung der optimierten Verwertung im Gesamtverfahren zugeführt.

Die Verdampfung des Brüdenkondensats in der destillativen Reinigung kann 1-stufig im Sinne eines einfachen Übertreibens erfolgen. Eine solche möglichst einfache Auslegung der Destillationsanlage kann immer dann zweckmäßig sein, wenn durch eine solche 1-stufige Behandlung eine hinreichende Reinigung des belasteten Brüdenteilstromes unter Abtrennung der mitgeschleppten Wert-und/oder Ballaststoffe möglich ist. Werden an die Auftrennung des belasteten Brüdenkondensats erhöhte Anforderungen gestellt, so erschließen sich für die erfindungsgemäße Reinigung des Flüssigkeitsstromes eine Mehrzahl von Möglichkeiten, die auch miteinander verbunden werden können.

In einer ersten Ausführungsform sieht hier die Erfindung vor, die destillative Reinigung durch Einsatz von entsprechenden Kolonnen mit Packungen beziehungsweise Füllkörpern vorzunehmen. Für die Ausgestaltung, Auslegung und den Betrieb solcher Fraktionierkolonnen gilt das allgemeine Fachwissen, auf das hier ausdrücklich verwiesen wird. Die optimale Rektifikationstemperatur wird der jeweiligen Problemstellung angepaßt.

In einer anderen Konzeption zur verbesserten Reinigung des belasteten Brüdenkondensats - die auch mit der zuletzt geschilderten fraktionierten Destillation kombiniert werden kann - sieht die Erfindung vor, mit einer Mehrzahl von Destillationsstufen zu arbeiten. Eine weitere Konzeption sieht vor, in einer mehrstufigen Eindampfanlage - zum Beispiel bis zu 5 Stufen, vorzugsweise 2 oder 3 Stufen - zu arbeiten. Ein gegebenenfalls anfallender Wärmeüberschuß kann in allen Fällen in Form von Heißwasser gewonnen werden.

In einer bevorzugten Ausführungsform sieht die Erfindung für die zuletzt geschilderte Konzeption der Reinigung in einer Folge mehrerer voneinander getrennter Eindampf- beziehungsweise Destillationsanlagen weiterhin vor, auch hier die Mehrzahl der Reinigungsschritte praktisch vollständig aus dem Energiehaushalt des aus der Dampftrocknungsanlage abgezogenen belasteten Brüdenteilstromes zu bewältigen. Hierzu wird im Sinne der Erfindung jeweils die Kondensationswärme aus der Kondensation der Dampfphase einer vorgängigen Arbeitsstufe durch bevorzugt indirekten Wärmeaustausch in den Sumpf des in der nachfolgenden Destillationsstufe zu verdampfenden Kondensats eingetragen. Auch hier kann wieder ein Teilstrom als Träger für die Überführung dieser Kondensationswärme in die nachfolgende Destillationsstufe eingesetzt werden. Dabei wird sinngemäß so vorgegangen wie es eingangs für das 1-stufige Destillationsverfahren geschildert ist. Der aus dem indirekten Wärmeaustauscher abgezogene und die Kondensationswärme enthaltende Flüssigteilstrom wird dementsprechend - zweckmäßigerweise unter angemessenem Überdruck - in die nachfolgende Destillationsstufe unmittelbar eingespeist und dort unmittelbar mit dem aus dem Wärmetauscher abgezogenen Kondensatstrom vermischt. Auf diese Weise wird dieses Kondensat dann in der nachgeschalteten Arbeitsstufe wieder verdampft und kann sinngemäß in eine weiterführend gereinigte Dampfphase und eine Wert- und/oder Ballaststoffe in erhöhter Konzentration enthaltende Sumpfphase aufgeteilt werden.

Wird mit einer solchen Mehrzahl von einander nachgeschalteten Eindampfbeziehungsweise Destillationsstufen gearbeitet, so kann Wert- und/oder Ballaststoff-Konzentrat aus dem Sumpf jeder einzelnen Destillationsstufe oder auch einer ausgewählten kleineren Zahl der Destillationsanlagen oder auch aus nur einer Destillationsstufe abgezogen werden. In dem zuletzt genannten Fall wird der belastete Sumpfteilstrom im allgemeinen aus der letzten Destillationsanlage abgezogen werden. Die jeweiligen Dampfphasen der einzelnen Destillationsstufen können in ihrer Gesamtheit als Kondensat in die nachfolgende Destillationsstufe überführt werden, ebenso ist es aber auch möglich, jeweils nur einen Anteil der kondensierten Dampfphase aus einer vorgängigen Destillationsstufe in die nachfolgende Destillationsstufe(n) überzuführen. Im einzelnen wird hier das technische Handeln durch die Beschaffenheit der zu reinigenden belasteten Brüdenteilströme, die Beschaffenheit der mitgeschleppten Wert- und/oder Ballaststoffe und durch die sich daraus jeweils ableitenden Entsorgungsmöglichkeiten bestimmt.

Beim Einsatz einer solchen Mehrzahl aufeinanderfolgender Destillationsstufen kann es zweckmäßig sein, in den einzelnen Arbeitsstufen mit unterschiedlichen Drucken zu arbeiten. Vorzugsweise wird dabei eine stufenweise Reduktion des Arbeitsdruckes zwischen einer vorgängigen Destillationsstufe und einer nachfolgenden Destillationsstufe vorgesehen. In diesem Sinne ist es möglich und fällt in den Rahmen der Erfindung, auf eine Destillation im Bereich des Normaldrucks eine nachfolgende Vakuumdestillation des Kondensats aus der ersten Reinigungsstufe bei vergleichsweise niederen Drucken vorzunehmen. In der Regel wird bei einer solchen stufenweisen Absenkung des Arbeitsdruckes in den aufeinanderfolgenden Destillationsstufen jedoch mit vergleichsweise geringen Druckabsenkungen zwischen den einzelnen Stufen gearbeitet. So ist es für ein solches Arbeiten bevorzugt, in einer nachfolgenden Destillationsstufe den Arbeitsdruck nur soweit zu senken, daß die Siedetemperatur des Wassers höchstens etwa 20 bis 30°C, vorzugsweise nicht mehr als 20°C und insbesondere nicht mehr als 10°C, abgesenkt wird. Schon vergleichsweise schwach abgesenkte Siedetemperaturen in der nachfolgenden Destillationsstufe, die im Bereich bis etwa 5°C unterhalb der Siedetemperatur des Wassers in der vorgängigen Destillationsstufe liegen, können wirkungsvoll für die erfindungsgemäße Lehre eingesetzt werden. Die Maßnahme einer solchen stufenweisen Reduktion des Arbeitsdruckes in beschränktem Ausmaß erleichtert den technologischen Gesamtaufwand des Verfahrens, begünstigt den Energiehaushalt des Reinigungsverfahrens in seiner Gesamtheit und ermöglicht damit eine Optimierung des Arbeitsergebnisses im Sinne der angestrebten Reinigung des belasteten Brüdenteilstromes unter kostenmäßig und ökologisch akzeptablen Bedingungen.

Die Lehre der Erfindung schließt eine direkte Einleitung des Brüdendampfes in das Kondensat in einer oder in mehreren Arbeitsstufen der Brüdenreinigung gemäß dem Stand des Wissens über Eindampfanlagen ausdrücklich ein, wenn auch der indirekte Wärmeaustausch bevorzugt sein kann.

Der Energieinhalt des Dampfes aus der letzten Destillationsstufe kann in aller Regel wiederum noch zum indirekten Wärmeaustausch, beispielsweise zum Aufheizen von Brauchwasser, eingesetzt werden und geht damit dem Gesamtverfahren nicht verloren. Die gereinigten Kondensatströme können je nach eingestelltem Reinheitsgrad und Bedarf als Brauchwasser - beispielsweise zur Reinigung technischer Anlagen als Spülwasser - gewünschtenfalls aber auch ganz einfach als wenigstens weitgehend umweltneutrales Abwasser verwendet beziehungsweise entsorgt werden.

Es leuchtet sofort ein, daß das erfindungsgemäße Reinigungsverfahren für belastete Brüdenteilströme beliebigen Ursprungs geeignet ist. Die erfindungsgemäße Lehre eignet sich dementsprechend als Ergänzung nicht nur für mit Heißdampf betriebene Sprühtrocknungs- oder Wirbelschichtanlagen, auch beliebige andere Verfahrenstypen, beispielsweise eine mit Heißdampf betriebene Granulation, insbesondere Aufbaugranulation, entsprechend betriebene Dünnschichtverdampfer, insbesondere Fallfilmverdampfer mit oder ohne Zwangsbewegung des zu trocknenden beziehungsweise einzudampfenden Materials in dünner Schicht, sind geeignete Vorstufen für das erfindungsgemäße Verfahren. In allen Kombinationen ergänzt die erfindungsgemäße Lehre die vorgängige Heißdampf-Arbeitsstufe sinnvoll: Das Arbeiten mit dem im Kreislauf geführten Heißdampfstrom schränkt gegenüber den bis heute beherrschenden Arbeitsverfahren mit einer nicht oder nur anteilsweise im Kreislauf geführten Gasphase die Abluft- beziehungsweise Abgasproblematik bereits substantiell ein. Die erfindungsgemäße Lehre der Aufarbeitung des belasteten abgezogenen Brüdenteilstromes ermöglicht jetzt erstmalig wirkungsvoll auch hier die praktisch schadstofffreie Entsorgung. Gegebenenfalls auftretende geringe Abgasmengen können in den geschilderte Verfahrensstufen sicher beherrscht und einer umweltschädlichen Entsorgung, beispielsweise durch gezielte thermische Behandlung, insbesondere gezielte Verbrennung, durch Biofilter und dergleichen, zugeführt werden. Probleme aus der Abwasserentsorgung sind beseitigt. Die erfindungsgemäße Lehre erstreckt sich damit auf den Gesamtbereich der Aufkonzentration, der Trocknung, der Pulverisierung und/oder der Granulierung von Wert- und/oder Ballaststoffen beliebigen Ursprungs. Die eingangs genannten Arbeitsgebiete der Trockung und/oder Granulierung von Wertstoffen und Wertstoffgemischen aus dem Bereich der Netz-, Wasch- und/oder Reinigungsmittel einerseits sowie die Trocknung eines in großen Mengen anfallenden Ballaststoffes von der Art der Klärschlämme aus kommunalen und/oder industriellen Abwasseranlagen sind dementsprechend lediglich beispielhaft bezüglich des Anwendungsbereiches der erfindungsgemäßen Lehre zu verstehen. Gleichwohl handelt es sich hier um zwei charakteristische Beispiele, die die praktische und technologische Bedeutung der erfindungsgemäßen Lehre ersichtlich werden lassen.

Die eingangs genannte DE-A 40 30 688 und die älteren deutschen Patentanmeldungen der Anmelderin gemäß P 42 04 035.3, P 42 04 090.6, P 42 06 050.8, P 42 06 521.6 und P 42 06 495.3 beschreiben wichtige Einzelheiten zur Heißdampftrocknung von Wertstoffen für Wasch- und Reinigungsmittel mit überhitztem Wasserdampf. Die Offenbarung dieser Schutzrechte beziehungsweise Schutzrechtsanmeldungen wird hiermit ausdrücklich auch zum Gegenstand der vorliegenden Erfindungsoffenbarung gemacht. Ein Teilproblem, das die großtechnischen Trocknungsverfahren solcher Wertstoffe beziehungsweise Wertstoffgemische beträchtlich belastet, ist das sogenannte Pluming, d.h. die Verschleppung von insbesondere nichtionischen Tensidkomponenten durch ihre Wasserdampfflüchtigkeit. Im Sinne des erfindungsgemäßen Handelns gelingt eine zuverlässige Abtrennung primär durch Pluming verschleppter Niotensidanteile durch eine 1- oder mehrstufige Nachreinigung im Sinne der erfindungsgemäßen destillativen Abstrombehandlungen.

Die Klärschlammtrocknung ist ein Beispiel für einen anderen Problembereich, der im Sinne der Erfindung einer verbesserten Lösung zugeführt werden kann: Insbesondere die heute im großen Umfang anfallenden Klärschlammassen anaeroben Ursprungs führen bis heute bei ihrer Trocknung zu einer nur schwer beherrschbaren Geruchsbelästigung. Erst in jüngster Zeit wird versucht, die Klärschlammtrocknung mittels Heißdampf und Brüdenkreislaufführung vorzunehmen. Problematisch bleibt gleichwohl die Aufarbeitung des abgezogenen belasteten Brüdenteilstromes, der der verdampften Wassermenge entspricht und möglichst umweltverträglich entsorgt werden muß. Die Lehre der Erfindung ermöglicht in angegebener Weise eine gewünschtenfalls mehrfache Abtrennung nicht kondensierbarer und besonders stark geruchsbelasteter Gasphasen und deren gezielte Vernichtung, beispielsweise durch thermische Behandlung. Gleichzeitig gelingt es, die Geruchsintensität der gegebenenfalls mehrstufig kondensierten Dampfphase soweit abzusenken, daß ihre Entsorgung auf konventionellem Wege problemlos wird. Dabei ist eine solche Reinigungsoperation, wie ausführlich dargestellt, praktisch ohne zusätzlichen Eintrag von Fremdenergie in die erfindungsgemäß der Dampftrocknung nachgeschaltete(n) Reinigungsstufe(n) möglich.

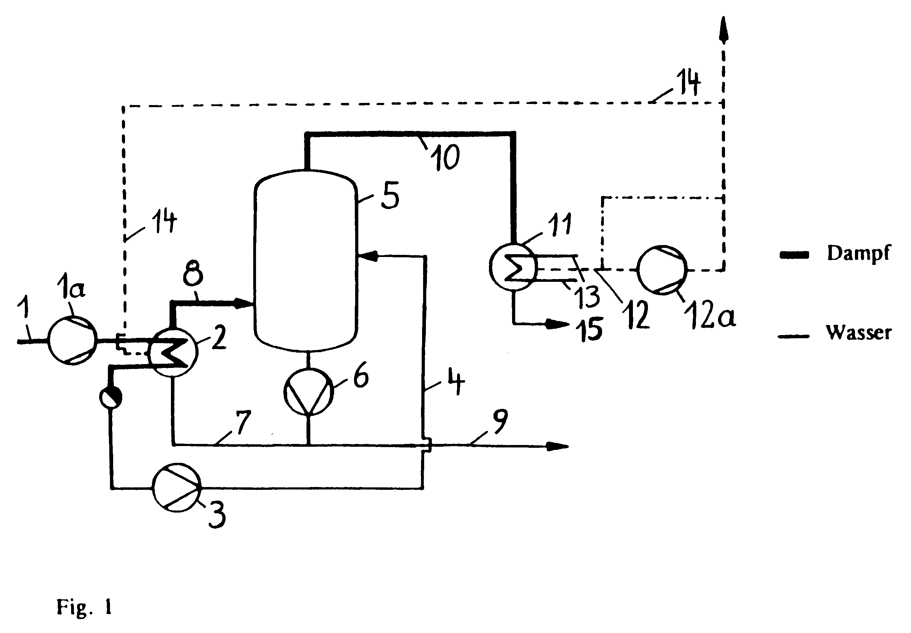

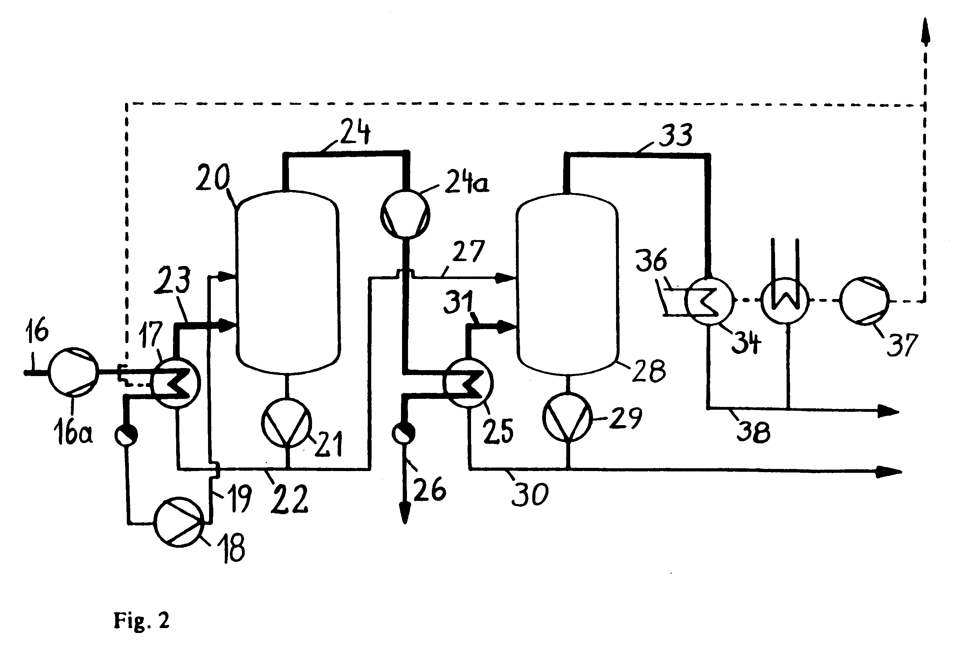

Die Figuren 1 und 2 zeigen beispielhaft Fließbilder von Ausführungsformen der erfindungsgemäßen Brüdenreinigung. Dabei stellt Figur 1 eine Versuchsanlage und Figur 2 eine 2-stufige Eindampfanlage für die großtechnische Realisierung dar. In beiden Fällen sind Dampfleitungen durch dicke Linien und Wasserleitungen durch dünne Linien gekennzeichnet.

Der belastete Brüdenteilstrom aus einer Heißdampftrocknungsanlage wird gemäß Figur 1 durch Leitung 1 über eine Pumpe 1a einem indirekten Wärmetauscher 2 zugeführt und hier in seiner Gesamtheit zur Flüssigphase kondensiert. Dabei gegebenenfalls anfallende geringfügige nicht kondensierbare Gasmengen sowie Hochsieder können über die Leitung 14 abgezogen und in geeigneter Weise entsorgt werden. Insbesondere kann dieses Gas der Zuluft für den nicht dargestellten Brenner der Dampftrocknungsanlage zugemischt werden, so daß im Gas eventuell vorhandene Verunreinigungen mitverbrannt werden. Der aus dem Wärmetauscher 2 abgezogene Flüssigstrom wird mittels der Pumpe 3 über die Leitung 4 in die Destillationsanlage 5 gepumpt. Aus dem Sumpf dieser Destillationsvorrichtung 5 wird mittels der Pumpe 6 über die Kreislaufleitung 7 Sumpfkondensat in den Wärmeaustauscher 2 geführt. Dieser Kondensatteilstrom nimmt die Kondensationsenergie des über Leitung 1 zugeführten Brüdenteilstromes auf und verdampft. Über Leitung 8 wird der entsprechend aufgeheizte Kreislaufstrom aus dem Sumpf der Destillationsvorrichtung in die Destillationsanlage 5 zurückgeführt und hier zum unmittelbaren Wärmeaustausch mit der über Leitung 4 zugeführten Brüdenkondensatmenge gebracht.

Über Leitung 9 wird ein Anteil des Sumpfkonzentrats aus 5 abgezogen. Dieser Konzentratstrom kann mittelbar oder unmittelbar in die Dampftrocknungsanlage zurückgeführt werden.

Der in der Destillationsanlage 5 erzeugte Wasserdampf wird über Leitung 10 abgezogen und in dem indirekten Wärmetauscher 11 kondensiert und beispielsweise zur Erzeugung von Warmwasser eingesetzt, das über Leitung 13 diesem indirekten Wärmetauscher 11 zugeführt und daraus wieder abgezogen wird. Das über Leitung 15 aus dem Wärmeaustauscher 11 abgezogene Dampfkondensat kann als Brauchwasser weiterverwendet oder als Abwasser entsorgt werden. Nicht kondensierbare gasförmige Anteile aus dem die Destillationsanlage 5 verlassenden Dampfstrom können über Leitung 12 und gegebenenfalls über eine Pumpe 12a der Leitung 14 und weiter der oben genannten Abgasentsorgung zugeführt werden.

Die Figur 2 zeigt beispielhaft eine 2-stufige Aufarbeitung des belasteten Brüdenteilstromes im Sinne des erfindungsgemäßen Handelns. Diese Anlage ist besonders für die großtechnische Realisierung geeignet.

Der belastete Brüdenstrom wird dem indirekten Wärmetauscher 17 über die Leitung 16 und die Pumpe 16a zugeleitet und verläßt als Kondensat den Wärmetauscher. Mittels der Pumpe 18 und der Leitung 19 wird das Brüdenkondensat in die erste Destillationsanlage 20 eingespeist. Aus dem Sumpf der Destillationsanlage wird mittels der Pumpe 21 über Leitung 22 der Flüssigteilstrom im Wärmetauscher 17 verdampft und über Leitung 23 zur Destillationsanlage 20 zurückgeführt.

Das über Leitung 19 in die erste Destillationsstufe 20 eingeleitete Brüdenkondensat wird mittels der über Leitung 23 zugeführten Kondensationsbeziehungsweise Verdampfungsenergie durch unmittelbare Vermischung der Materialströme aus 19 und 23 anteilsweise wieder verdampft. Der Dampf verläßt über Leitung 24 und Pumpe 24a die erste Destillationsstufe und wird in dem indirekten Wärmetauscher 25 zur Flüssigphase kondensiert. Über Leitung 26 kann das Kondensat in mehrfacher Weise weitergeführt werden. Je nach Reinigungsgrad kann es als Brauchwasser eingesetzt werden, es kann gegebenenfalls als Abwasser entsorgt werden, es ist aber auch möglich - in der Zeichnung allerdings nicht ausdrücklich dargestellt - diesen Kondensatanteil ebenfalls der zweiten Destillationsstufe 28 zuzuführen.

Über die Leitung 27 wird der nicht verdampfte und nicht als Kreislaufstrom benötigte Anteil des Sumpfes aus der Destillationsanlage 20 in die zweite Destillationsstufe 28 geleitet und hier mit einem aufgeheizten zweiten Kreislaufstrom in unmittelbaren Energieaustausch gebracht, der durch Abziehen eines Anteils des Sumpfes aus 28 mittels der Pumpe 29 und der Kreislaufführung über die Leitung 30, den indirekten Wärmetauscher 25 und die Rückführleitung 31 in 28 eingegeben wird. Die in der zweiten Destillationsstufe gebildete Dampfphase verläßt über 33 die Vorrichtung und kann über den indirekten Wärmetauscher 34 beispielsweise zur Warmwassererzeugung (Zu- und Ableitung 36) eingesetzt werden. Das dabei erzeugte Kondensat verläßt über 38 den indirekten Wärmetauscher 34 und kann wieder beliebigen Verwendungszwecken als Brauchwasser und/oder als Abwasser zugeführt werden. Wert- und/oder Ballaststoffe in erhöhter Konzentration enthaltende Flüssigphasenanteile aus dem Sumpf der zweiten Destillationsvorrichtung 28 werden über Leitung 30 ausgeschleust und mittelbar oder unmittelbar in die Heißdampftrocknung zurückgegeben.

Die Figur 2 zeigt außerdem die Möglichkeit, mittels der Pumpe 37 den Arbeitsdruck der zweiten Destillationsstufe gegenüber dem Arbeitsdruck der ersten Destillationsstufe abzusenken.

Die nachfolgenden Beispiele beschreiben konkrete Betriebsdaten und Ergebnisse im Sinne des technischen Handelns der Erfindung, dabei wird auf die Figur 1 Bezug genommen.

### Beispiele

### Beispiel 1

An einem Versuchssprühturm im Technikumsmaßstab der Firma Niro-Atomizer wurde ein Versuch zur Erzeugung von Pulverprodukt aus Waschmittelslurry in überhitztem Wasserdampf durchgeführt. Der zugeführte Massenstrom an Slurry betrug 20,8 kg/h, was einem Volumenstrom von 16 l/h entsprach, dabei wies der Slurry einen Wassergehalt von 50 % auf. Hierbei wurde der als Trocknungsmedium genutzte Wasserdampf im Kreislauf geführt und lediglich der dem Produkt entzogene Wasseranteil ausgekreist und im nachfolgenden Arbeitsschritt aufbereitet.

Hierzu wird zuvor angefallenes Kondensat des ausgekreisten Brüdenteilstromes in einem Verdampfer mit Zwangsumlauf und innenliegendem Wärmetauscher aufkonzentriert, wobei die Beheizung des Verdampfers durch den aus dem Trocknungskreislauf ausgeschleusten Dampf erfolgte. Das aus dem Wärmetauscher austretende Kondensat wurde dem Verdampfer als Feed zugeführt. Der Heißdampf aus dem Trocknungskreislauf trat während des Versuches mit 179°C in den Wärmetauscher des Verdampfers ein. Bei der Einstellung des Konzentratrückflusses zum Wärmetauscher ist zu beachten, daß die Rückflußmenge einerseits die Kondensation des in die Eindampfanlage eintretenden Dampfstromes garantiert und andererseits noch eine Überhitzung des rückgeführten Konzentratstromes gewährleistet bleibt. Hierfür wurde bei der Versuchsdurchführung derart vorgegangen, daß man den Rückfluß so einstellte, daß am Wärmetauscher gerade eine vollständige Kondensation des eintretenden Dampfes erreicht wurde.

Durch Kondensation des aus dem Verdampfer abgezogenen Brüdenstromes wurde durch mittelbaren Wärmeaustausch Warmwasser von 81°C erzeugt (Eintrittstemperatur: 15°C), der Warmwasserstrom belief sich dabei auf ca. 74 l/h. Das den Wärmetauscher verlassende Kondensat hatte eine Temperatur von 63°C bei einem Mengenstrom von ca. 9,6 kg/h.

Hinter dem Kondensator konnte ein geringer Gasstrom festgestellt werden, der sich aus angesaugter Falschluft sowie nicht kondensierten Anteilen des Dampfstromes zusammensetzte. Dieser Gasstrom wurde quantitativ nicht bestimmt.

Der mit der Eindampfanlage erzeugte und daraus abgezogene Konzentratstrom belief sich auf ca. 0,2 kg/h.

### Beispiel 2

In einem weiteren Versuch an der Trocknungsanlage der Firma Niro Atomizer, Typ "Minor Produktion", wurde Waschmittelslurry durch Versprühen in überhitztem Wasserdampf getrocknet. Während des Versuches belief sich der Slurrystrom (50 % Wassergehalt) auf 32,5 kg/h, was einem Volumenstrom von 25 l/h entsprach. Der Wasserdampf, der als Trocknungsmedium diente, wurde im Kreislauf geführt, wobei der überschüssige Dampf aus dem Kreislauf ausgeschleust wurde.

Mit dem ausgekreisten Dampf wurde der Wärmetauscher der nachgeschalteten Eindampfanlage gespeist, das aus dem Wärmetauscher austretende Kondensat wurde anschließend dem Verdampfer als Feed zugeführt. Die Temperatur des Dampfstromes, mit der der Dampf in den Wärmetauscher eintrat, belief sich während des Versuches auf 168°C.

Der am Verdampfer anfallende Brüdenstrom wurde in einem Kondensator zur Erzeugung von Warmwasser von 79°C genutzt (Temperatur des Kaltwassers: 15°C). Es konnten während dieses Versuches ca. 109,8 l/h Warmwasser erzeugt werden. Die am Ausgang gemessene Temperatur des Kondensates betrug 66°C, der Massenstrom an Kondensat belief sich auf ca. 13,9 kg/h. Auch in diesem Versuch konnte hinter dem Kondensator ein Gasstrom festgestellt werden, der aber nicht erfaßt wurde.

Während des Versuches wurde aus dem Verdampfer ein Konzentratstrom von ca. 0,4 kg/h abgezogen.

## Patentansprüche

1. Verfahren zur Optimierung der Entsorgung des mit verschleppten Wert- und/oder Ballaststoffen belasteten Brüdenteilstromes, der als Wasserdampf-Produktstrom aus mit überhitztem Wasserdampf als Trocknungsgas betriebenen Trocknungsanlagen ausgeschleust und anschließend wenigstens anteilsweise durch direkten und/oder indirekten Wärmeaustausch mit einem Kühlmedium kondensiert wird, dadurch gekennzeichnet, daß man das anfallende Brüdenkondensat einer wenigstens 1-stufigen thermischen Nachreinigung unterwirft, wobei als Kühlmedium zur Kondensation des aus der Trocknungsanlage abgezogenen belasteten Brüdenteilstromes zuvor aus der thermischen Reinigung gewonnenes Brüdenkondensat eingesetzt und dann zusammen mit der vom Brüdenteilstrom aufgenommenen Kondensationswärme der thermischen Nachreinigung unterworfen wird, wobei weiterhin das belastete Brüdenkondensat der thermischen Reinigung (Destillationsstufe) als wäßrige Flüssigphase zugeführt und hier mittels der übertragenen Kondensationswärme anteilig wieder verdampft wird, während aus der Sumpfphase der Destillationsstufe ein Flüssigteilstrom mit erhöhter Konzentration an verschleppten Wert- und/oder Ballaststoffen abgezogen wird.

2. Verfahren nach Anspruch 1, dadurch gekennzeichnet, daß der belastete Brüdenteilstrom mehrstufig kondensiert und das jeweils anfallende partielle Brüdenkondensat der thermischen Nachreinigung unterworfen wird.

3. Verfahren nach Ansprüchen 1 und 2, dadurch gekennzeichnet, daß der Sumpf der Destillationsstufe durch direkten oder indirekten Wärmeaustausch mit Hilfe der Kondensationswärme des dampfförmig zugeführten Brüdenteilstromes überhitzt wird.

4. Verfahren nach Ansprüchen 1 bis 3, dadurch gekennzeichnet, daß zur Kondensation des belasteten Brüdenteilstromes in den Sumpf der Destillationsstufe ein indirekter Wärmeaustauscher integriert ist oder bevorzugt ein Teilstrom des Brüdenkondensats aus dem Sumpf der Destillationsstufe abgezogen, durch einen indirekten Wärmeaustauscher zur Aufnahme der Kondensationswärme des dampfförmig zugeführten Brüdenteilstromes geleitet, dann in die Destillationsstufe zurückgeführt und hier mit dem flüssigen Brüdenkondensat unmittelbar vermischt wird.

5. Verfahren nach Ansprüchen 1 bis 4, dadurch gekennzeichnet, daß der Übertrag der Kondensationswärme in die Destillationsstufe mit dem fließfähigen Trägermedium unter erhöhtem Druck erfolgt, wobei soweit erhöhte Drucke bevorzugt sein können, daß der im Kreislauf geführte Teilstrom des Brüdenkondensats (Sumpf) auch nach dem Verlassen des Wärmetauschers wenigstens überwiegend als Flüssigphase vorliegt.

6. Verfahren nach Ansprüchen 1 bis 5, dadurch gekennzeichnet, daß die aus der Destillationsstufe abgezogene Dampfphase durch bevorzugt indirekten Wärmetausch erneut kondensiert und dann gewünschtenfalls einer weiteren Verwertung zugeführt wird.

7. Verfahren nach Ansprüchen 1 bis 6, dadurch gekennzeichnet, daß in den einzelnen Kondensationsstufen gegebenenfalls anfallende nicht kondensierbare Gasphasen umweltverträglich entsorgt werden, insbesondere zusammen mit den Brenngasen zur Erzeugung des überhitzten Wasserdampfes zum Betrieb der Trocknungsanlage verbrannt werden.

8. Verfahren nach Ansprüchen 1 bis 7, dadurch gekennzeichnet, daß der mit Wert- und/oder Ballaststoffen angereicherte und aus dem Sumpf der Destillationsstufe abgezogene Flüssigteilstrom wenigstens anteilsweise mittelbar oder unmittelbar in die Dampftrocknungsstufe zurückgeführt wird.

9. Verfahren nach Ansprüchen 1 bis 8, dadurch gekennzeichnet, daß mit mehreren, vorzugsweise 2 oder 3 Destillationsstufen für den belasteten Brüdenkondensatstrom gearbeitet wird, wobei bevorzugt jeweils die Kondensationswärme aus der Kondensation der Dampfphase der vorgängigen Destillationsstufe durch Wärmeaustausch in diese nachfolgende Destillationsstufe übertragen wird.

10. Verfahren nach Ansprüchen 1 bis 9, dadurch gekennzeichnet, daß in den aufeinanderfolgenden Destillationsstufen bei stufenweise reduzierten Drucken gearbeitet wird.

11. Verfahren nach Ansprüchen 1 bis 10, dadurch gekennzeichnet, daß die erste Destillationsstufe bei Normaldruck und eine zweite Destillationsstufe bei mäßig verringertem Druck, vorzugsweise bei einer Absenkung der Siedetemperatur des Wassers um nicht mehr als 20°C und insbesondere um nicht mehr als 10°C, gearbeitet wird.

12. Verfahren nach Ansprüchen 1 bis 11, dadurch gekennzeichnet, daß die Verdampfung des Brüdenkondensats in der destillativen Reinigung 1-stufig und/oder als fraktionierte mehrstufige Destillation vorgenommen wird.

13. Verfahren nach Ansprüchen 1 bis 12, dadurch gekennzeichnet, daß der zu entsorgende Brüdenteilstrom aus der Trocknung von Wertstoffen beziehungsweise Wertstoffgemischen mittels überhitztem Wasserdampf stammt, die als Netz-, Wasch- und/oder Reinigungsmittel und/oder zur Verwendung in solchen Mitteln geeignet sind.

14. Verfahren nach Ansprüchen 1 bis 13, dadurch gekennzeichnet, daß der zu entsorgende Brüdenteilstrom aus der Wasserdampftrocknung eines die Umwelt belastenden wasserhaltigen Gutes, beispielsweise aus der Trocknung und/oder Agglomerierung von toxischen Materialien, wie Pestiziden, Herbiziden und anderen bei Raumtemperatur festen toxischen Wert- und/oder Abfallstoffen oder aus der Trocknung von stark geruchsbelasteten Materialien, wie Klärschlämmen, insbesondere anaeroben Klärschlämmen, oder Tierfäkalien entstammt.

15. Anwendung des Verfahrens nach Ansprüchen 1 bis 14, zur von Abgasen und belasteten Abwässern praktisch freien Gewinnung getrockneter Wertstoffe und Wertstoffgemische, die als Netz-, Wasch- und/oder Reinigungsmittel und/oder zur Verwendung in solchen Mitteln geeignet sind und aus ihren wasserhaltigen Zubereitungen durch Trocknung mit überhitztem Wasserdampf gewonnen werden.

## Claims

1. A process for optimizing disposal of the stream of vapors laden with entrained useful and/or ballast materials which is removed as a steam product stream from drying installations operated with superheated steam as the drying gas and is then at least partly condensed by direct and/or indirect heat exchange with a cooling medium, characterized in that the vapor condensate accumulating is subjected to an at least one-stage thermal afterpurification, vapor condensate obtained by thermal purification beforehand being used as the cooling medium for condensation of the laden vapor stream removed from the drying installation and then being subjected to thermal postpurification together with the heat of condensation taken up by the vapor stream and the laden vapor condensate being delivered as aqueous liquid phase to the thermal purification stage (distillation stage) and being partly evaporated again by the heat of condensation transferred while a liquid stream with a high concentration of entrained useful and/or ballast materials is removed from the sump phase of the distillation stage.

2. A process as claimed in Claim 1, characterized in that the laden vapor stream removed from the drying installation is condensed by a multistep process and the recovered partial condensates are subjected to subsequent purification.

3. A process as claimed in claim 1 and claim 2, characterized in that
the sump of the distillation stage is superheated by direct or indirect heat exchange with the heat of condensation of the vapor stream introduced.

4. A process as claimed in claims 1 to 3, characterized in that, to condense the laden vapor stream, an indirect heat exchanger is integrated in the sump of the distillation stage or, preferably, part of the vapor condensate is removed from the sump of the distillation stage, passed through an indirect heat exchanger to take up the heat of condensation of the vapor stream introduced, subsequently returned to the distillation stage and directly mixed therein with the liquid vapor condensate.

5. A process as claimed in claims 1 and 4, characterized in that the heat of condensation is transferred to the distillation stage by the fluid carrier medium under elevated pressure, preferably under such elevated pressures that the circulated stream of vapor condensate (sump) is at least predominantly present as liquid phase even after leaving the heat exchanger.

6. A process as claimed in claims 1 to 5, characterized in that the vapor phase removed from the distillation stage is recondensed by preferably indirect heat exchange and, if desired, is subsequently put to another use.

7. A process as claimed in claims 1 to 6, characterized in that any non-condensible gas phases accumulating in the individual condensation stages are safely disposed of, and which, in particular, are incinerated together with fuel gases to produce the overheated steam for the drying installation.

8. A process as claimed in claims 1 to 7, characterized in that the liquid stream enriched with useful and/or ballast materials and removed from the sump of the distillation stage is returned--at least partly--directly or indirectly to the steam drying stage.

9. A process as claimed in claims 1 to 8, characterized in that several, preferably 2 or 3, distillation stages are used for the laden vapor condensate, the heat of condensation from the condensation of the vapor phase in the preceding distillation stage being transferred to the following distillation stage by heat exchange.

10. A process as claimed in claims 1 to 9, characterized in that pressures reduced in stages are applied in the successive distillation stages.

11. A process as claimed in claims 1 to 10, characterized in that the first distillation stage is operated at normal pressure and a second distillation stage is operated at moderately reduced pressure, preferably with a reduction in the boiling temperature of the water of no more than 20°C and preferably no more than 10°C.

12. A process as claimed in claims 1 to 11, characterized in that evaporation of the vapor condensate in the distillation-based purification is carried out in a single stage and/or as fractional multistage distillation.

13. A process as claimed in claims 1 to 12, characterized in that the vapor stream to be disposed of emanates from the drying with superheated steam of useful materials or mixtures of useful materials which are suitable for use as and/or in wetting agents, detergents and/or cleaning products.

14. A process as claimed in claims 1 to 13, characterized in that the vapor stream to be disposed of emanates from the drying with superheated steam of an environment-polluting water-containing material, for example from the drying and/or agglomeration of toxic materials, such as pesticides, herbicides and other toxic materials and/or waste solid at room temperature or from the drying of strong-smelling materials, such as sewage sludges, more particularly anaerobic sewage sludges, or animal feces.

15. The use of the process claimed in claims 1 to 14 for the recovery of dried useful materials and mixtures of useful materials, which are suitable for use as and/or in wetting agents, detergents and/or cleaning products, from water-containing preparations thereof in the substantial absence of waste gases and polluted wastewaters by drying with superheated steam.

## Revendications

1. Procédé d'optimisation de l'évacuation du courant partiel de buée chargé de substances de valeur et/ou stériles entraînées, qui a été éliminé sous forme de courant de produit et de vapeur d'eau d'installations de séchage fonctionnant avec de la vapeur d'eau surchauffée, comme gaz de séchage et ensuite a été condensé au moins partiellement par échange de chaleur direct et/ou indirect avec un milieu de refroidissement, caractérisé en ce que l'on soumet le condensat de buée qui s'est produit, à une purification ultérieure thermique en au moins une étape, dans laquelle comme milieu de refroidissement pour la condensation du courant partiel de buée chargé, soutiré de l'installation de séchage, on met en oeuvre le condensat de buée obtenu au préalable à partir de la purification thermique et ensuite on le soumet, ensemble avec la chaleur de condensation recueillie du courant partiel de buée, à une purification ultérieure thermique, dans lesquelles en outre le condensat de buée chargé est amené à la purification thermique (étape de distillation) sous forme de phase liquide aqueuse, et là à l'aide de la chaleur de condensation transférée est à nouveau partiellement évaporé, alors qu'à partir de la phase liquide de l'étape de distillation, un courant partiel de liquide ayant une concentration accrue en substances de valeur et/ou stériles entraînées, est retiré.

2. Procédé selon la revendication 1, caractérisé en ce que le courant partiel de buée chargé, est condensé en plusieurs étapes et que le condensat de buée qui se produit à chaque fois, est soumis à la purification ultérieure thermique.

3. Procédé selon les revendications 1 et 2, caractérisé en ce que la phase liquide de l'étape de distillation est surchauffée par échange de chaleur direct ou indirect, à l'aide de la chaleur de condensation du courant partiel de buée amené sous forme de vapeur.

4. Procédé selon les revendications 1 à 3, caractérisé en ce que pour la condensation du courant partiel de buée chargé, un échangeur de chaleur indirect est intégré dans la phase liquide de l'étape de distillation ou de préférence un courant partiel du condensat de buée est soutiré de la phase liquide de l'étape de distillation, est conduit à travers un échangeur indirect de chaleur en vue de recueillir la chaleur de condensation du courant partiel de buée amené sous forme de vapeur, puis est recyclé dans l'étape de distillation et là est mélangé directement au condensat de buée liquide.

5. Procédé selon les revendications 1 à 4, caractérisé en ce que le transfert de la chaleur de condensation dans l'étape de distillation s'effectue avec le milieu support apte à l'écoulement sous pression accrue, pour autant que des pressions accrues puissent être préférées, en ce que le courant partiel amené dans le circuit du condensat de buée (bas de colonne) se présente aussi après avoir quitté l'échangeur de chaleur, au moins principalement sous forme de phase liquide.

6. Procédé selon les revendications 1 à 5, caractérisé en ce que la phase vapeur soutirée de l'étape de distillation est condensée à nouveau par échange de chaleur indirect de préférence et ensuite si désiré amenée à une utilisation ultérieure.

7. Procédé selon les revendications 1 à 6, caractérisé en ce que dans les stades de condensation individuels, les phases gazeuses qui se produisent éventuellement, non condensables sont éliminées d'une manière compatible avec l'environnement, en particulier conjointement avec les gaz de combustion sont brûlées en vue de l'obtention de vapeur d'eau surchauffée pour le fonctionnement de l'installation de séchage.

8. Procédé selon les revendications 1 à 7, caractérisé en ce que le courant partiel de liquide enrichi en substances de valeur et/ou stériles et soutiré de la phase liquide de l'étape de distillation est recyclé au moins partiellement indirectement ou directement dans l'étape de séchage par la vapeur.

9. Procédé selon les revendications 1 à 8, caractérisé en ce que l'on opère avec plusieurs, de préférence 2 ou 3, étapes de distillation pour le courant de condensat de buée chargé, dans lequel de préférence la chaleur de condensation provenant de la condensation de la phase vapeur de l'étape de distillation préliminaire, à chaque fois est transférée par échange de chaleur dans cette étape de distillation subséquente.

10. Procédé selon les revendications 1 à 9, caractérisé en ce que dans les étapes de distillation consécutives, on opère à des pressions graduellement réduites.

11. Procédé selon les revendications 1 à 10, caractérisé en ce que l'on effectue la première étape de distillation à pression normale et une deuxième étape de distillation à une pression diminuée modérément, de préférence pour un abaissement du point d'ébullition de l'eau de pas plus de 20°C et en particulier de pas plus de 10°C.

12. Procédé selon les revendications 1 à 11, caractérisé en ce que l'on effectue l'évaporation du condensat de buée dans la purification par distillation en une étape et/ou sous forme de distillation fractionnée en plusieurs étapes.

13. Procédé selon les revendications 1 à 12, caractérisé en ce que le courant partiel de buée à éliminer du séchage de substances de valeur ou de mélanges de substances de valeur est issu au moyen de vapeur d'eau surchauffée, qui convient comme agent de mouillage de lavage et/ou de nettoyage et/ou pour l'utilisation dans de tels agents.

14. Procédé selon les revendications 1 à 13, caractérisé en ce que le courant partiel de buée qui doit être éliminé provient du séchage à la vapeur d'eau d'un produit renfermant de l'eau qui est nocif pour l'environnement, par exemple provenant du séchage et/ou de l'agglomération de matériaux toxiques, comme des pesticides, des herbicides et d'autres substances de valeur et/ou de rebut, toxiques, solides à température ambiante ou du séchage de produits fortement incommodants pour l'odorat comme des boues d'égout, en particulier des boues d'égout anaérobies ou des matières fécales animales.

15. Utilisation du procédé selon les revendications 1 à 14 pour l'obtention de substances de valeur ou de mélanges de substances de valeur séchés pratiquement dépourvus de gaz d'échappement et d'eaux usées chargées, qui conviennent comme agents de mouillage, de lavage et/ou de nettoyage et/ou en vue de l'utilisation dans de tels agents et qui sont produits à partir de leurs préparations aqueuses par séchage avec de la vapeur d'eau surchauffée.
